# EUROPEAN PATENT SPECIFICATION

(11) **EP 2 070 020 B1**
(45) Date of publication and mention of the grant of the patent: **11.07.2012**
(21) Application number: 07823134.7
(22) Date of filing: 19.09.2007
(51) Int. Cl.: G06K 19/077, B32B 21/04, B27D 1/00, B27H 1/00, B32B 21/00

(54) **WOOD BOARD**
HOLZBRETT
CARTON-BOIS

(30) Priority: 19.09.2006 FI 20060381 U
(43) Date of publication of application: 17.06.2009
(73) Proprietor: UPM Raflatac Oy, 33310 Tampere (FI)
(72) Inventor: PATOVIRTA, Juha, FI-15870 Hollola (FI)
(74) Representative: Palmgren, Eero Juhani
(86) International application number: PCT/FI2007/050497
(87) International publication number: WO 2008/034948

(56) References cited:
- EP-A- 1 089 220
- EP-A- 1 594 082
- EP-A1- 1 699 002
- WO-A1-2005/014260
- CA-A1- 2 352 077
- DE-A1- 19 856 506
- DE-A1-102004 036 593
- DE-U1- 20 005 975
- JP-A- 2005 316 596
- US-A- 6 001 452
- US-A1- 2002 057 440
- US-A1- 2006 103 098

## Description

### FIELD OF THE INVENTION

The invention relates to a layered board and a manufacturing method as defined in the preamble of claims 1 and 5, which board is formed of at least two veneer layers, which are joined to one another by means of adhesive. Attached to the layered board is a remotely readable identifier.

### BACKGROUND OF THE INVENTION

Known from prior art are various wood boards, e.g. plywoods, veneer boards or the like.

Known from prior art is the gluing of different types of adhesive labels or product specifications onto the surface of the wood board in a separate working phase to provide product information. The problem with adhesive labels attached to the surface is their easy detachment due to variations in temperature and humidity.

Furthermore, known from prior art are different types of intelligent adhesive labels and intelligent identifiers for use in conjunction with different types of products to express the desired product information. Intelligent identifiers can normally be read remotely by means of a reader device.

The attachment of the intelligent identifier substantially to a wood board is not known from prior art.

Different wooden products with intelligent identifiers are known from DE 20005975U, WO 2005/014260, CA 2352077, US 6001452, EP 1699002, DE 19856506, US 2006/0103098, JP 2005316596, EP 1594082 and EP 1089220. Further, an intelligent identifier is known from US 2002/0057440.

In particular, DE 20005975U discloses a wooden product comprising multiple wood articles which consist of timber materials such as a chip board or a fibre board. A transponder can be attached between wood articles or in a recess or a borehole in the wooden product. Said wood article, e.g. board, is thicker wood material than veneer.

DE19856506 discloses a wooden product, such as a door, comprising an integrated transponder.

EP1699002 discloses a laminated lumber for use in building a house or the like. A coated electronic tag can be inserted between the surfaces of the constituent lumbers. Lumber products or constituents lumbers are not layered boards, and they are not formed of thin veneers.

CA2352077 discloses lumber products comprising electronically readable microchip. Lumber products are not layered boards, and they are not formed of veneers.

US6001452 discloses high-strength engineered structural wood products. These wood products are not layered boards, and they are not formed of veneers.

WO 2005/014260 discloses a transport accessory, such as a timber box, comprising an encapsulated bar code device or RFID. The accessory is coated with external skin material. The bar code device or RFID can be encapsulated under external skin or between external skins, not between veneers. Said skin is not veneer formed of a wood-based material. The external skins are preferably formed from APET, PET, polycarbonate and other non-permeable chemically resistant thermoformable plastic sheets (page 6, lines 23-24).

### OBJECTIVE OF THE INVENTION

The objective of the invention is to eliminate the drawbacks referred to above. Specifically, the objective of the invention is to disclose the attachment of an intelligent identifier to a layered board using a new type of solution.

### SUMMARY OF THE INVENTION

A layered board and a manufacturing method according to the invention are characterized by what is presented in the claims.

As used herein, layered board refers to any wood board product, plywood product, composite product, pressed board product or the like composed of separate veneer layers, which are mainly formed of wood-based materials and in whose separate layers are stacked one on top of the other and are glued to one another.

AS used herein, veneer layer refers to any thin layer of wood, which is used in the formation of a layered board.

As used herein, remotely readable identifier refers to any product information equipment, product identifier or chip, in which the manufacturer or customer can store any information regarding the product and/or using which some characteristic of the product can be measured or monitored. The remotely readable identifier can store more comprehensive product information or alternatively only the product identifier or ID-number of the product. The remotely readable identifier is preferably capable of being read remotely, and its information can under certain circumstances be modified either directly within the remotely readable identifier or by a separate information system that recognizes the product on the basis of the product identifier within the product. Preferably, the remotely readable identifier is very thin so as to be unnoticeably arranged between the veneer layers.

In a preferred embodiment, the veneer layers of the layered board are stacked on top of one another and adhesive is arranged in between the layers. The remotely readable identifier is arranged inside the product formed by these layers, between layers, in conjunction with production of the layered board and, specifically, in conjunction with the stacking and gluing of the layers.

The stacking of the layers, gluing them to one another and other normal stages of layered board production can be done by means known per se in the art.

In a preferred embodiment of the invention, such a remotely readable identifier is selected that can withstand layered board production conditions, preferably a temperature of more than 100°C and a pressure of more than 1.6 MPa.

In one embodiment of the invention, a remotely readable identifier is arranged in the layered board under the first veneer layer, near to the upper surface or lower surface of the board. In this case, the remotely readable identifier is protected from mechanical damage, but the layer on top of the remotely readable identifier is thin, wherein the reading distance of the remotely readable identifier is as long as possible. In an alternative embodiment, the remotely readable identifier can be arranged anywhere between the layers.

In one embodiment the layered board is formed of veneer layers and coating layer arranged thereupon, and the remotely readable identifier is arranged between the first veneer layer and the coating layer of the board. Preferably, the coating layer is arranged on top of the veneer layers using so-called cold gluing without applying heat or heating.

In one embodiment of the invention, a remotely readable identifier having an RFID identification circuit is used, e.g. an RFID transponder, RFID inlay, etc. The RFID identifier may comprise a sensor.

In one embodiment, a remotely readable identifier is used, which can function as a measurer of information or characteristics and/or as a collector measuring some product characteristic, such as moistness, load or the like. In one embodiment, desired product information can be stored within the remotely readable identifier and, further, the remotely readable identifier can function as a measurer of characteristics.

In one embodiment, a remotely readable identifier is used, whose information can be modified after production of the layered board when the remotely readable identifier is located within the layered board.

The remotely readable identifier is located at the desired site within the board. In one preferred embodiment, the remotely readable identifier is located in the middle of the board.

In one embodiment, as the adhesive between the veneer layers is used liquid phenolic resin or its derivative which is water-soluble. For gluing is preferably used thermosetting phenolic resin.

In one embodiment, polyurethane adhesive is used for gluing the coating layer on top of the veneer layers.

In one embodiment, the remotely readable identifier can be coated with a compound or polymer or other coating appropriate for the purpose. In one embodiment, the remotely readable identifier is coated with polyamide, e.g. nylon to improve the strength of the glue line at the location site of the remotely readable identifier.

A layered board according to the invention can comprise veneer layers of different thickness. The thicknesses of the veneer layers can vary. The veneer layers can be arranged in the desired position, i.e. crosswise or lengthwise in the desired order.

By using the invention, to a layered board can be added desired remotely readable product information in accordance to the desires of a customer or user. The desired product information travels with board all the time. By using the invention, layered boards can later be identified and connected to a certain production. To the remotely readable identifier can be added information important to the customer or user, such as production information or instructions for use.

An advantage of the invention is that the remotely readable identifier can be added as a part of the sandwich-type wood board, between layers, already at the production stage of the layered board, wherein separate work stages are not required. By using the invention, the remotely readable identifier within the layered board is protected from mechanical damage and wear. Furthermore, an remotely readable identifier arranged within a layered board cannot be removed without breaking the board.

By using the invention, a layered board is provided that has many applications, for example, in automated warehouse management; in conjunction with system matrices and ingot base-plates, whose circulation time and service life must be monitored; as scaffolding level boards, from which an exact production date must be found; and in conjunction with punches, wherein it can be read for what purpose the punch was made and how many units have been produced using it.

### LIST OF FIGURES

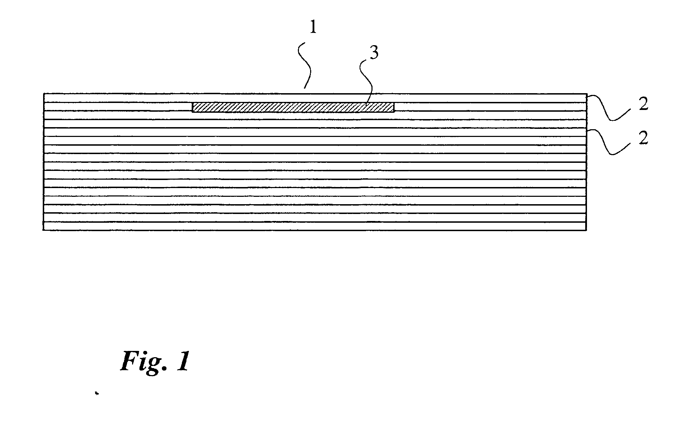

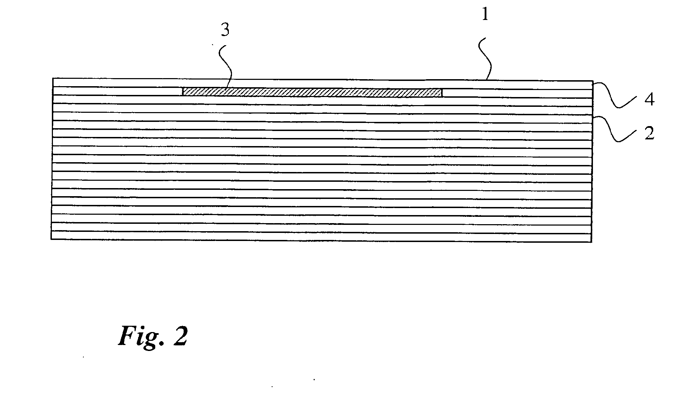

In the following, the invention is described by means of detailed embodiment examples with reference to accompanying figures 1 and 2, in which
Fig. 1 shows a plywood according to the invention, in which the intelligent identifier is arranged between the veneer layers, and
Fig. 2 shows a conventional plywood, not covered by the present invention, in which the intelligent identifier is arranged between the veneer layer and the coating layer.

### DETAILED DESCRIPTION OF THE INVENTION

The intelligent identifiers used in the examples were RFID transponders by Rafsec. In the tests of the example, the intelligent identifiers were placed at the predetermined sites in the plywood in conjunction with production of the plywood. After production of the plywood, it was tested whether the intelligent identifiers placed in the plywood remained operational.

### Example 1

In this test, placement of intelligent identifiers on the surface of the plywood by hot-pressing under the formed surface layer was examined.

A 600 mm x 600 mm birch plywood sample having a thickness of 12 mm was produced. The birch plywood was coated by hot-pressing 120 g/m² with polyphenol, onto which 4 intelligent identifiers were placed. A 120 g/m² polyphenol coating was also arranged on top of the intelligent identifiers by hot-pressing. The production conditions for the plywood were as follows: pressing temperature 130 °C, pressure 1.6 MPa and time 7 min.

Based on the test, it could be observed that an intelligent identifier does not remain operational when it is attached to the thermosetting coating of the plywood by hot-pressing.

### Example 2

In this test, placement of intelligent identifiers 3 on the glue line between the veneer layers 2 of the plywood was examined (Fig. 1).

A 600 mm x 600 mm birch plywood sample having a thickness of 12 mm was produced. The birch plywood was formed of 1.5 mm thick veneers 2, which were joined to one another by gluing with liquid phenolic resin adhesive. 4 intelligent identifiers 3 were placed between the topmost veneer layers 2 by gluing them to the glue line. The production conditions were as follows: pressing temperature 130 °C, pressure 1.6 MPa and time 12 min.

Based on the test, it could be observed that an intelligent identifier remains operational when it is attached to the glue line between veneers.

### Example 3

In this test, placement of intelligent identifiers on the glue line between the veneer layers of the plywood when the plywood was additionally coated was examined.

A 600 mm x 600 mm birch plywood sample having a thickness of 12 mm was produced. The birch plywood was formed of 1.5 mm thick veneers, which were joined to one another by gluing with liquid phenolic resin adhesive. 4 intelligent identifiers were placed between the topmost veneer layers by gluing them to the glue line. The plywood formed was coated with 120 g/m² polyphenol coating by hot-pressing. The production conditions were as follows: In the production of the plywood the pressing temperature was 130 °C, pressure 1.6 MPa and time 12 min; and in the coating process the pressing temperature was 130°C, pressure 1.4 MPa and time 6 min.

Based on the test, it could be observed that an intelligent identifier remains operational when it is attached to the glue line between veneers in conjunction with coated plywood.

### Example 4

In this test, placement of intelligent identifiers 3 on the surface of the plywood under the surface layer 4 was examined (Fig. 2).

A 600 mm x 600 mm birch plywood sample having a thickness of 12 mm was produced. The birch plywood was formed from 1.5 mm thick veneers 2, which were joined to one another by gluing with liquid phenolic resin adhesive. 4 intelligent identifiers 3 were placed on top of the topmost veneer layer 2. A polypropylene coating 4 was glued on top of the intelligent identifiers 3 using polyurethane adhesive by means of so-called cold gluing. In the coating process, neither heat nor significant pressure was used. After application of the adhesive and the coating, the board was run through the roller that pressed the coating 4 onto the board.

Based on the test, it could be observed that an intelligent identifier remains operational when it is attached to the surface of the plywood under a cold-glued coating 4, between the coating 4 and the topmost veneer layer 2.

Based on the tests conducted, it can be concluded that the best site for an remotely readable identifier is on the glue line between the layers of a layered board, wherein it is protected from mechanical damage and wear.

A layered board according to the invention is suitable in its different embodiments for different types of applications.

The embodiments of the invention are not limited to the examples presented rather many variations are possible within the scope of the accompanying claims.

## Claims

1. A layered board (1),
which comprises two veneer layers,
each of which is a thin layer of wood with maximum thickness of a few millimetres and
which are stacked one on top of the other and joined to one another by gluing by means of adhesive so that the adhesive layer is arranged between the veneer layers as a glue line layer,
**characterized in that**
the layered board (1) comprises further at least one remotely readable RFID transponder (3),
which is made of a material that withstands a temperature of more than 100°C and a pressure of more than 1.6 MPa and
which is arranged into the glue line layer at a predetermined site and between the two veneer layers (2) of the layered board in conjunction with the stacking and gluing of the veneer layers to form the layered board (1).

2. A layered board according to claim 1, **characterized in that** the remotely readable RFID transponder comprises a sensor.

3. A layered board according to claim 1 or 2, **characterized in that** the remotely readable RFID transponder (3) is arranged in the layered board (1) under the first veneer layer (2).

4. A layered board according to any one of claims 1 - 3, **characterized in that** the layered board comprises more than one remotely readable RFID transponder at predetermined sites.

5. A layered board according to any one of claims 1 - 4, **characterized in that** the remotely readable RFID transponder (3) is coated for improving the strength of the glue line at the location site of the identifier.

6. A layered board according to any one of claims 1 - 5, **characterized in that** phenolic resin is used as an adhesive in the glue line layer.

7. A manufacturing method comprising
the step of stacking at least two veneer layers (2), each of which is a thin layer of wood with maximum thickness of a few millimetres, one on top of the other
and joining the veneer layers to one another by gluing by means of adhesive
so that the adhesive layer is arranged between the veneer layers as a glue line layer to form a layered board (1),
**characterized in that**
the method comprises the further step of arranging at least one remotely readable RFID transponder (3) which is made of a material that withstands a temperature of more than 100°C and a pressure of more than 1.6 MPa
into the glue line layer at a predetermined site and between the two veneer layers (2) in conjunction with the stacking and gluing of the veneer layers to form the layered board (1).

8. A method according to claim 7, **characterized in that** the remotely readable RFID transponder (3) is coated for improving the strength of the glue line at the location site of the identifier.

9. A method according to claim 7 or 8, **characterized in that** an information of the remotely readable RFID transponder is modified after production of the layered board.

10. A method according to any one of claims 7 - 9, **characterized in that** after production of the layered board it is tested that the remotely readable RFID transponder remains operational.

## Patentansprüche

1. Schichtplatte (1),
die zwei Furnierschichten umfasst,
von denen jede eine dünne Schicht aus Holz mit einer maximalen Dicke von einigen Millimetern ist, und
die übereinander geschichtet und durch Kleben mittels eines Klebstoffes untereinander verbunden sind, so dass die Klebstoffschicht zwischen den Furnierschichten als eine Leimschicht angeordnet ist,
**dadurch gekennzeichnet, dass**
die Schichtplatte (1) des Weiteren zumindest einen fernlesbaren RFID Transponder (3) [Hochfrequenz-Erkennungs-Transponder] aufweist,
der aus einem Werkstoff besteht, der einer Temperatur von mehr als 100°C und einem Druck von mehr als 1,6 MPa standhält und
der in der Leimschicht an einer vorbestimmten Stelle und zwischen den zwei Furnierschichten (2) der Schichtplatte in Verbindung mit dem Übereinanderschichten und Kleben der Furnierschichten zum Bilden der Schichtplatte (1) angeordnet wird.

2. Schichtplatte nach Anspruch 1, **dadurch gekennzeichnet, dass**
der fernlesbare RFID Transponder einen Sensor enthält.

3. Schichtplatte nach Anspruch 1 oder 2, **dadurch gekennzeichnet, dass**
der fernlesbare RFID Transponder (3) in der Schichtplatte (1) unter der ersten Furnierschicht (2) angeordnet ist.

4. Schichtplatte nach einem der Ansprüche 1 bis 3, **dadurch gekennzeichnet, dass**
die Schichtplatte an vorbestimmten Stellen mehr als einen fernlesbaren RFID Transponder aufweist.

5. Schichtplatte nach einem der Ansprüche 1 bis 4, **dadurch gekennzeichnet, dass**
der fernlesbare RFID Transponder (3) zur Verbesserung der Festigkeit der Leimschicht an der Fixierungsstelle der Kennzeichnung beschichtet ist.

6. Schichtplatte nach einem der Ansprüche 1 bis 5, **dadurch gekennzeichnet, dass**
Phenolharz als ein Klebstoff in der Leimschicht verwendet wird.

7. Herstellungsverfahren mit dem Schritt des Übereinanderschichtens mindestens zweier Furnierschichten (2), von denen jede eine dünne Schicht aus Holz mit einer maximalen Dicke von einigen Millimetern ist, und des Verbindens der Furnierschichten untereinander durch Kleben mittels eines Klebstoffes, so dass die Klebstoffschicht zwischen den Furnierschichten als eine Leimschicht zum Bilden einer Schichtplatte (1) angeordnet ist, **dadurch gekennzeichnet, dass**
das Verfahren den weiteren Schritt des Anordnens zumindest eines fernlesbaren RFID Transponders (3), der aus einem Werkstoff besteht, der einer Temperatur von mehr als 100°C und einem Druck von mehr als 1,6 MPa standhält, in der Leimschicht an einer vorbestimmten Stelle und zwischen den zwei Furnierschichten (2) in Verbindung mit dem Übereinanderschichten und Kleben der Furnierschichten zum Bilden der Schichtplatte (1) umfasst.

8. Verfahren nach Anspruch 7, **dadurch gekennzeichnet, dass** der fernlesbare RFID Transponder (3) zur Verbesserung der Festigkeit der Leimschicht an der Fixierungsstelle der Kennzeichnung beschichtet ist.

9. Verfahren nach Anspruch 7 oder 8, **dadurch gekennzeichnet, dass** eine Information des fernlesbaren RFID Transponders nach Herstellung der Schichtplatte modifiziert wird.

10. Verfahren nach einem der Ansprüche 7 bis 9, **dadurch gekennzeichnet, dass** nach Herstellung der Schichtplatte geprüft wird, dass der fernlesbare RFID Transponder funktionsbereit bleibt.

## Revendications

1. Panneau stratifié (1),
comprenant deux couches de placage,
chacune étant une couche mince de bois ayant une épaisseur maximale de quelques millimètres, et
qui sont empilées l'une au-dessus de l'autre et liées l'une à l'autre par collage au moyen d'un adhésif, de sorte que la couche d'adhésif est disposée entre les couches de placage sous la forme d'une couche de ligne de collage,
**caractérisé en ce que** le panneau stratifié (1) comprend en outre au moins un transpondeur RFID interrogeable à distance (3),
qui est composé d'un matériau résistant à une température supérieure à 100 °C et à une pression supérieure à 1,6 MPa et
qui est disposé dans la couche de ligne de collage sur un site prédéterminé et entre les deux couches de placage (2) du panneau stratifié conjointement avec l'empilement et le collage des couches de placage pour former le panneau stratifié (1).

2. Panneau stratifié selon la revendication 1, **caractérisé en ce que** le transpondeur RFID interrogeable à distance comprend un capteur.

3. Panneau stratifié selon la revendication 1 ou 2, **caractérisé en ce que** le transpondeur RFID interrogeable à distance (3) est disposé dans le panneau stratifié (1) sous la première couche de placage (2).

4. Panneau stratifié selon l'une quelconque des revendications 1 à 3, **caractérisé en ce que** le panneau stratifié comprend plusieurs transpondeurs RFID interrogeables à distance sur des sites prédéterminés.

5. Panneau stratifié selon l'une quelconque des revendications 1 à 4, **caractérisé en ce que** le transpondeur RFID interrogeable à distance (3) est enduit pour améliorer la résistance de la ligne de collage sur le site d'emplacement de l'identificateur.

6. Panneau stratifié selon l'une quelconque des revendications 1 à 5, **caractérisé en ce qu'**une résine phénolique est utilisée comme adhésif dans la couche de ligne de collage.

7. Procédé de fabrication, comprenant
l'étape d'empilement d'au moins deux couches de placage (2), chacune étant une couche mince de bois ayant une épaisseur maximale de quelques millimètres, l'une au-dessus de l'autre,
et de liaison des couches de placage l'une à l'autre par collage au moyen d'un adhésif, de sorte que la couche adhésive est disposée entre les couches de placage sous la forme d'une couche de ligne de collage pour former un panneau stratifié (1), **caractérisé en ce que**
le procédé comprend l'étape supplémentaire de placement d'au moins un transpondeur RFID interrogeable à distance (3) qui est composé d'un matériau résistant à une température supérieure à 100 °C et à une pression supérieure à 1,6 MPa
dans la couche de ligne de collage sur le site prédéterminé et entre les deux couches de placage (2) conjointement avec l'empilement et le collage des couches de placage pour former le panneau stratifié (1).

8. Procédé selon la revendication 7, **caractérisé en ce que** le transpondeur RFID interrogeable à distance (3) est enduit pour améliorer la résistance de la ligne de collage sur le site d'emplacement de l'identificateur.

9. Procédé selon la revendication 7 ou 8, **caractérisé en ce qu'**une information du transpondeur RFID interrogeable à distance est modifiée après la production du panneau stratifié.

10. Procédé selon l'une quelconque des revendications 7 à 9, **caractérisé en ce qu'**après la production du panneau stratifié, un test est effectué pour déterminer si le transpondeur RFID interrogeable à distance reste opérationnel.
